(19) **Europäisches Patentamt / European Patent Office / Office européen des brevets**

(11) **EP 4 471 668 A1**

(12) **EUROPEAN PATENT APPLICATION**
published in accordance with Art. 153(4) EPC

(43) Date of publication:
04.12.2024 Bulletin 2024/49

(21) Application number: 23824117.8

(22) Date of filing: 24.05.2023

(51) International Patent Classification (IPC):
*G06N 3/08* (2023.01)      *G06N 3/04* (2023.01)
*G06N 5/04* (2023.01)      *G06F 9/50* (2006.01)
*H04L 67/289* (2022.01)      *H04L 67/10* (2022.01)

(52) Cooperative Patent Classification (CPC):
G06F 9/50; G06N 3/04; G06N 3/08; G06N 5/04;
H04L 67/10; H04L 67/289

(86) International application number:
**PCT/KR2023/007112**

(87) International publication number:
**WO 2023/243896 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 17.06.2022  KR 20220074445
                28.10.2022  KR 20220141761

(71) Applicant: Samsung Electronics Co., Ltd.
Gyeonggi-do, 16677 (KR)

(72) Inventors:
• **PARK, Chanjong**
  Suwon-si, Gyeonggi-do 16677 (KR)
• **JUNG, Jaeil**
  Suwon-si, Gyeonggi-do 16677 (KR)
• **BAHN, Dongha**
  Suwon-si, Gyeonggi-do 16677 (KR)
• **JANG, Junik**
  Suwon-si, Gyeonggi-do 16677 (KR)

(74) Representative: **Appleyard Lees IP LLP**
**15 Clare Road**
**Halifax HX1 2HY (GB)**

(54) **ELECTRONIC DEVICE FOR DETERMINING INFERENCE DISTRIBUTION RATIO OF ARTIFICIAL NEURAL NETWORK AND OPERATION METHOD THEREOF**

(57)     Provided is an electronic device including a memory storing a state inference model, and at least one instruction; a transceiver; and at least one processor configured to execute the at least one instruction to: obtain, via the transceiver, first state information of each of a plurality of devices at a first time point, obtain second state information of each of the plurality of devices at a second time point that is a preset time interval after the first time point, by inputting the first state information to the state inference model, and determine an inference distribution ratio of the artificial neural network of each of the plurality of devices, based on the second state information of each of the plurality of devices, where the electronic device is determined among the plurality of devices, based on network states of the plurality of devices.

FIG. 3

EP 4 471 668 A1

**Description**

[Technical Field]

The disclosure relates to an electronic device for determining an inference distribution ratio of an artificial neural network between a plurality of devices, by predicting state information of the plurality of devices, and an operating method of the electronic device.

[Background Art]

An artificial neural network refers to a computing system that is based on a neural network of a human or animal brain and is implemented as hardware or software. The artificial neural network is used in various fields by using classification, inference, or the like of the artificial neural network.

In order to decrease an amount of computation of a device performing inference of the artificial neural network, one device does not perform inference of the artificial neural network but the artificial neural network may be partitioned and thus an inference procedure may be performed in a plurality of devices.

For distributed inference of the artificial neural network, the artificial neural network may be partitioned according to a function of each device and an inference procedure of the artificial neural network may be distributedly performed in each device according to a partitioning ratio.

[Disclosure]

[Technical Solution]

According to an aspect of the disclosure, an electronic device may include: a memory storing a state inference model, and at least one instruction; a transceiver; and at least one processor configured to execute the at least one instruction to: obtain, via the transceiver, first state information of each of a plurality of devices at a first time point, obtain second state information of each of the plurality of devices at a second time point that is a preset time interval after the first time point, by inputting the first state information to the state inference model, and determine an inference distribution ratio of the artificial neural network of each of the plurality of devices, based on the second state information of each of the plurality of devices, where the electronic device is determined among the plurality of devices, based on network states of the plurality of devices.

Each of the first state information and the second state information may include at least one of a usage rate of a central processing unit (CPU), a usage rate of a graphics processing unit (GPU), a temperature of the CPU, a temperature of the GPU, the number of executed applications, or an elapsed time of each of the plurality of devices.

The second state information may include an elapsed time, and the at least one processor may be further configured to execute the at least one instruction to: normalize an inverse number of the elapsed time of each of the plurality of devices, and determine the normalized inverse number of the elapsed time, as the inference distribution ratio of the artificial neural network of each of the plurality of devices.

The at least one processor may be further configured to execute the at least one instruction to: obtain third state information comprising at least one of whether a preset application may be executed, whether a screen is turned on, or whether a camera is executed, at the first time point; and obtain the second state information based on additionally inputting the third state information to the state inference model.

The at least one processor may be further configured to execute the at least one instruction to: transmit, via the transceiver, the determined inference distribution ratio and an inference start point of the artificial neural network to each of the plurality of devices.

The at least one processor may be further configured to execute the at least one instruction to: partition the artificial neural network according to the determined inference distribution ratio, and transmit, via the transceiver, the partitioned artificial neural network to each of the plurality of devices corresponding to the determined inference distribution ratio.

The state inference model may be regression-trained based on an input of state information for training at a third time point and target state information at a fourth time point after a preset time interval from the third time point.

The network states may be network input/output (I/O) packet amounts of the plurality of devices based on test information received by a first device from the plurality of devices excluding the first device, the first device being randomly selected from the plurality of devices.

The electronic device may be a candidate device connected to a wired network from at least one candidate device that may be selected from the plurality of devices and has a network I/O packet amount equal to or smaller than a preset packet amount.

The electronic device may be a candidate device having a highest GPU throughput from among the at least one candidate device.

According to an aspect of the disclosure, a method, performed by an electronic device, includes: obtaining first state information at a first time point from each of a plurality of devices; obtaining second state information of each of the plurality of devices at a second time point that is a preset time interval after the first time point, by inputting the first state information to a state inference model; and determining an inference distribution ratio of an artificial neural network of each of the plurality of devices, based on the second state information of each of the plurality of devices, where the electronic device is determined among the plurality of devices, based on network states of the plurality of devices.

Each of the first state information and the second state information comprises at least one of a usage rate of a central processing unit (CPU), a usage rate of a graphics processing unit (GPU), a temperature of the CPU, a temperature of the GPU, the number of executed applications, or an elapsed time of each of the plurality of devices.

The second state information comprises an elapsed time, and the determining of the inference distribution ratio comprises: normalizing an inverse number of the elapsed time of each of the plurality of devices; and determining the normalized inverse number of the elapsed time, as the inference distribution ratio of the artificial neural network.

The obtaining of the second state information comprises: obtaining third state information comprising at least one of whether a preset application is executed, whether a screen is turned on, or whether a camera is executed, at the first time point; and obtaining the second state information based on additionally inputting the third state information to the state inference model.

The method may further include: transmitting the determined inference distribution ratio and an inference start point of the artificial neural network to each of the plurality of devices.

The method may further include: partitioning the artificial neural network according to the determined inference distribution ratio; and transmitting the partitioned artificial neural network to each of the plurality of devices corresponding to the determined inference distribution ratio.

The state inference model may be regression-trained based on an input of state information for training at a third time point and target state information at a fourth time point after a preset time interval from the third time point.

The network states are network input/output (I/O) packet amounts of the plurality of devices based on test information received by a first device from the plurality of devices excluding the first device, the first device being randomly selected from the plurality of devices.

The electronic device may be a candidate device having a highest GPU throughput from among the at least one candidate device.

According to an aspect of the disclosure, a non-transitory computer readable medium stores computer readable program code or instructions which are executable by a processor to perform a method, the method comprising: obtaining first state information at a first time point from each of devices comprising an electronic device; obtaining second state information of each of the devices at a second time point that is a preset time interval after the first time point, by inputting the first state information to a state inference model; and determining an inference distribution ratio of an artificial neural network of each of the plurality of devices, based on the second information of each of the plurality of devices, where the electronic device is determined among the plurality of devices, based on network states of the plurality of devices.

[Description of Drawings]

The above and other aspects, features, and advantages of certain embodiments of the present disclosure will be more apparent from the following description taken in conjunction with the accompanying drawings, in which:

FIG. 1 illustrates a connected state of a plurality of devices, according to an embodiment;
FIG. 2 illustrates an artificial neural network partitioned by a plurality of devices for partitioned inference of the artificial neural network, according to an embodiment;
FIG. 3 illustrates an example of a function of an electronic device, according to an embodiment;
FIG. 4 illustrates an operation in which an electronic device infers second state information by receiving an input of first state information, according to an embodiment;
FIG. 5 illustrates an example of an operation in which an electronic device infers second state information by receiving an input of first state information and additional information, according to an embodiment;
FIG. 6 illustrates an example of an operation in which a portion of an artificial neural network is transmitted to at least one device according to a determined inference distribution ratio, and each device performs inference of the artificial neural network, according to an embodiment;
FIG. 7 illustrates an example of selecting an electronic device to determine an inference distribution ratio from among a plurality of devices, according to an embodiment;
FIG. 8 illustrates a block diagram of a configuration of an electronic device, according to an embodiment;
FIG. 9 illustrates a block diagram of a configuration of each device, according to an embodiment;.
FIG. 10 illustrates a flowchart of a method, performed by an electronic device, of determining an inference distribution ratio of an artificial neural network, according to an embodiment;.
FIG. 11 illustrates a flowchart of a method of selecting an electronic device for determining an inference distribution ratio of an artificial neural network, according to an embodiment.

[Mode for Invention]

Throughout the disclosure, the expression "at least one of a, b or c" indicates only a, only b, only c, both a and b, both a and c, both b and c, or all of a, b, and c.

Hereinafter, the disclosure will now be described more fully with reference to the accompanying drawings for one of ordinary skill in the art to be able to perform any embodiment of the disclosure without difficulty. The disclosure may, however, be embodied in many different forms and should not be construed as being limited to any embodiment of the disclosure set forth herein. In the drawings, parts not related to the disclosure are not illustrated for clarity of explanation, and like reference numerals denote like elements throughout the disclosure.

All terms used in any embodiment of the disclosure are selected from among general terms that are currently widely used, in consideration of their functions in the disclosure. However, the terms may have different meanings according to the intention of one of ordinary skill in the art, precedent cases, or the appearance of new technologies. Also, some terms may be arbitrarily selected by the applicant, and in this case, the meaning of the selected terms will be described in detail in the detailed description of the disclosure. Therefore, the terms used in the present specification should not be interpreted based on only their names but have to be defined based on the meaning of the terms together with the descriptions throughout the specification.

As used herein, the singular forms are intended to include the plural forms as well, unless the context clearly indicates otherwise. All the terms used herein, including technical or scientific terms, may have the same meanings as those generally understood by one of ordinary skill in the art of the disclosure.

As used in the present specification, the term "unit" or "module" denotes an entity for performing at least one function or operation, and may be implemented as hardware, software, or a combination of hardware and software.

Throughout the specification, it will also be understood that when an element is referred to as being "connected to" another element, it can be "directly connected to" or "physically connected to" the other element, or it can be "electrically connected to" the other element by having an intervening element interposed therebetween. In the disclosure, the terms "transmit", "receive", and "communicate", as well as derivatives thereof, encompass both direct and indirect communication. Also, when a part "includes" or "comprises" an element, unless there is a particular description contrary thereto, the part can further include other elements, not excluding the other elements.

Throughout the disclosure, the expression "or" is inclusive and not exclusive, unless the context clearly indicates otherwise. Thus, the expression "A or B" may refer to "A, B, or both", unless the context clearly indicates otherwise. In the disclosure, the phrase "at least one of", when used with a list of items, means that different combinations of one or more of the listed items may be used, and only one item in the list may be needed. For example, "at least one of: A, B, or C" may include any of the following combinations: A, B, C, A and B, A and C, B and C, or A and B and C.

The term "controller" may refer to any device, system or part thereof which controls at least one operation. The controller may be implemented in hardware, a combination of hardware and software, or firmware. The functionality associated with any particular controller may be centralized or distributed, whether locally or remotely.

Any embodiment of the disclosure to be described below may be implemented or supported by one or more computer programs, which may be produced from computer-readable program code and stored in a computer-readable medium. In the disclosure, the terms "application" and "program" may refer to one or more computer programs, software components, instruction sets, procedures, functions, objects, classes, instances, relevant data, which are appropriate for an implementation in computer-readable program code, or a part thereof. The term "computer-readable program code" may include various types of computer code including source code, object code, and executable code. The term "computer-readable medium" may include various types of media that is accessible by a computer, such as read-only memory (ROM), random-access memory (RAM), a hard disk drive (HDD), a compact disc (CD), a digital video disc (DVD), or various types of memory.

In addition, a computer-readable storage medium may be provided in the form of a non-transitory storage medium. Here, the term 'non-transitory storage medium' refers to a tangible device, and may exclude wired, wireless, optical, or other communication links that transmit temporary electrical or other signals. In addition, the term 'non-transitory storage medium' does not distinguish between a case in which data is stored in a storage medium semi-permanently and a case in which data is stored temporarily. For example, the non-transitory storage medium may include a buffer in which data is temporarily stored. A computer-readable medium may be any available medium that is accessible by a computer, and may include a volatile or non-volatile medium and a removable or non-removable medium. The computer-readable media includes media in which data may be permanently stored and media in which data may be stored and overwritten later, such as a rewritable optical disc or an erasable memory device.

According to an embodiment of the disclosure, methods according to any embodiment of the disclosure may be included in a computer program product and then provided. The computer program products may be traded as commodities between sellers and buyers. The computer program product may be distributed in the form of a machine-readable storage medium (e.g., a CD-ROM), or be distributed (e.g., downloaded or uploaded) online through an application store (e.g., PlayStore™), or between two user devices (e.g., smart phones) directly. In a case of online distribution, at least a portion of the computer program product (e.g., a downloadable app) may be temporarily stored or generated in a machine-readable storage medium such as a manufacturer's server, an application store's server, or a memory of a relay server.

Definitions of other particular words and phrases may be provided throughout the disclosure. One of ordinary skill in the art should understand that in many, if not most instances, such definitions apply to prior as well as future uses of such defined words and phrases.

In the specification, each element described hereinafter may additionally perform some or all of functions performed by another element, in addition to main functions of itself, and some of the main functions of each element may be performed entirely by another element.

In the present specification, the term 'machine learning' is a field of artificial intelligence, and refers to an algorithm for learning and executing an action that is not empirically defined in code, based on data.

In the present specification, the term 'artificial neural network' refers to a computing system generated by replicating human neural network and being trained by machine learning, and, when information is input to the artificial neural network, the artificial neural network may output, based on training, a result with respect to the input.

In the present specification, the term 'device' may refer to an electronic device for performing a certain operation by using an electrical signal. In the present specification, the term 'device' may be interchangeably used with 'electronic device'.

Brief descriptions about respective drawings are provided to gain a sufficient understanding of the drawings of the present specification.

The trained artificial neural network can obtain a response to a given problem by performing classification and inference, and thus, is used in various fields. However, as many hardware resources are usable in inference of the artificial neural network, when an entity to perform inference of the artificial neural network is one device, an excessive amount of computations may be requested to the one device.

When a plurality of devices are network-connected to each other, a distributed inference system including the plurality of devices may be provided to perform distributed inference by partitioning the artificial neural network.

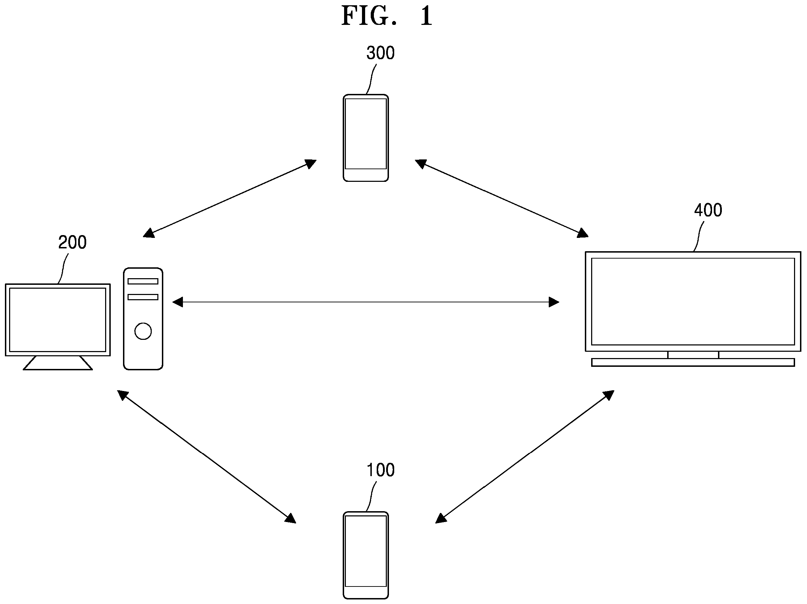

FIG. 1 illustrates a connected state of a plurality of devices, according to an embodiment.

Referring to FIG. 1, a distributed inference system may include an electronic device 100, a first device 200, a second device 300, and a third device 400. However, FIG. 1 merely illustrates an example, and the distributed inference system may further include more devices or fewer devices according to a network state. The disclosure is not limited thereto.

Here, the electronic device 100, the first device 200, the second device 300, and the third device 400 may each be a device capable of performing network communication with one another, and each device may be used to infer a portion or entirety of an artificial neural network.

In the present specification, it is described that the electronic device 100 determines an inference distribution ratio of the artificial neural network, but this is merely an example, and thus, one device among the first device 200, the second device 300, and the third device 400, other than the electronic device 100, may determine the inference distribution ratio of the artificial neural network. The disclosure is not limited thereto.

The electronic device 100, the first device 200, the second device 300, and the third device 400 may configure a network by using known wired or wireless communication. For example, the devices may communicate with each other by using a device-communication method including a short-range wireless communication network (e.g.: Bluetooth, WiFi direct or infrared data association (IrDA)) or a long-range wireless communication network (e.g.: a cellular network, Internet or a computer network (e.g.: local area network (LAN) or a wide area network (WAN)).

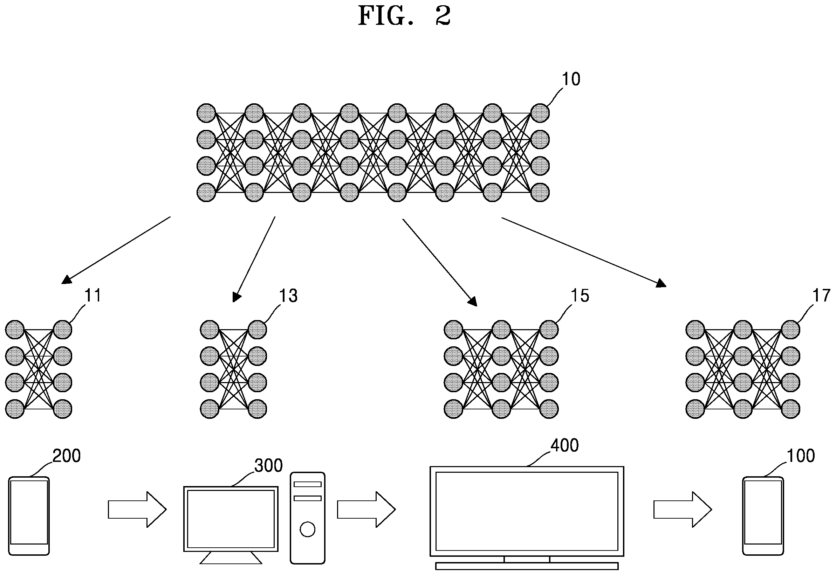

FIG. 2 illustrates an artificial neural network partitioned by a plurality of devices for partitioned inference of the artificial neural network, according to an embodiment.

Referring to FIG. 2, an artificial neural network 10 may be a multi-perceptron including a plurality of hidden layers between an input layer and an output layer. Also, the artificial neural network 10 may be a known artificial neural network model such as a recurrent neural network (RNN), a convolutional neural network (CNN), a deep neural network (DNN), or the like. In the present specification, for convenience of descriptions, the artificial neural network 10 is described as a DNN but the disclosure is not limited thereto.

The DNN may be an artificial neural network including a plurality of hidden layers between an input layer and an output layer. Also, the DNN may include multiple hidden layers to learn various nonlinear relations.

Also, the artificial neural network 10 may be a model pre-trained as an artificial neural network model for inference, and a procedure for inferring a result by inputting input information to the artificial neural network 10 may be divided into a plurality of procedures in which the artificial neural network 10 is partitioned according to an inference distribution ratio determined by the electronic device 100.

For example, it is assumed that the electronic device 100 determines an inference distribution ratio of the first device 200 as 15%, determines an inference distribution ratio of the second device 300 as 15%, determines an inference distribution ratio of the third device 400 as 35%, and determines an inference distribution ratio of the electronic device 100 as 35%. In this case, the electronic device 100 may partition an entire artificial neural network and then may sequentially allocate an inference procedure to each device according to each partitioning ratio. Accordingly, a first procedure 11 corresponding to first 15% of the artificial neural network 10 may be allocated to the first device 200, a second procedure 13 corresponding to 15% of the artificial neural network 10 after the first procedure 11 may be allocated to the second device 300, a third procedure 15 corresponding to 35% of the artificial neural network 10 after the second procedure 13 may be allocated to the third device 400, and a fourth procedure 17 corresponding to a remaining inference procedure of the artificial neural network 10 may be allocated to the electronic device 100.

When an inference procedure of the partitioned artificial neural network 10 is distributed to each device, each device may perform the inference procedure in order of the first device 200, the second device 300, the third device 400, and the electronic device 100, such that an inference procedure of the entire artificial neural network 10 may be performed.

In more detail, when an input value is input to the first device 200, the first device 200 may perform the first procedure 11, and then may transmit a first intermediate result value of an entire inference procedure to the second device 300. Afterward, the second device 300 may perform the second procedure 13 with the received first intermediate result value as an input to the second procedure 13, and then may transmit a second intermediate result value as a result of the second procedure 13 to the third device 400. The third device 400 may perform the third procedure 15 with the received second intermediate result value as an input to the third procedure 15, and then may transmit a third intermediate result value as a result of the third procedure 15 to the electronic device 100. Lastly, the electronic device 100 may perform the fourth procedure 17 with the received third intermediate result value as an input to the fourth procedure 17, and then may output an inference result of the entire artificial neural network 10.

As each device distributedly processes an inference procedure of the partitioned artificial neural network 10, there may be various effects including an effect of preventing one device from using excessive resources.

With respect to an inference distribution ratio of the artificial neural network 10, the electronic device 100 may determine a greater inference distribution ratio for a device having higher computation performance, according to a computation performance ratio of a central processing unit (CPU) or a graphics processing unit (GPU) included in each device. Also, an inference distribution ratio of each device may be determined to allow a greater inference distribution ratio to be allocated to a device with a smaller usage amount, according to a current usage amount of a CPU or a GPU.

However, when an inference distribution ratio is determined based on a computation performance ratio, there may be a problem in which an occupancy ratio of a CPU or a GPU of a device used by a user is not considered. Also, even when an allocation ratio is determined according to a usage amount of a CPU or a GPU, a device state varies according to whether an application used by a user is executed, whether a camera is used, or the like, and thus, allocation may not be accurately performed according to a usage amount of a CPU or a GPU after the allocation ratio is determined.

When the electronic device 100 according to an embodiment of the disclosure performs an inference procedure by using the artificial neural network 10 with an input of state information about each device, the electronic device 100 may infer a state of each device by using a state prediction model. As an inference distribution ratio is determined according to an inferred state of each device, inference distribution ratio of each device may be dynamically determined in a further correct manner, according to a usage amount of each device.

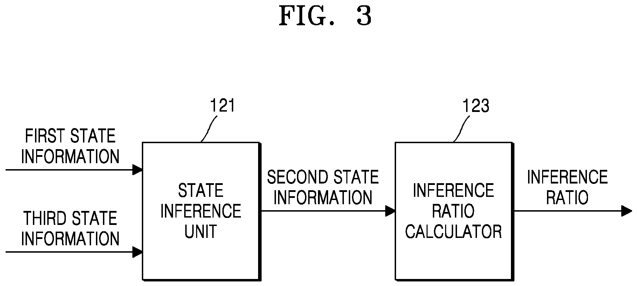

Hereinafter, with reference to FIGS. 3, 4 and 5, the electronic device 100 that dynamically determines inference distribution ratio of an artificial neural network will now be described in detail.

FIG. 3 illustrates an example of a function of an electronic device, according to an embodiment.

Referring to FIG. 3, the electronic device 100 of FIG. 2 may include a state inference unit 121 and an inference ratio calculator 123. However, functions included in the electronic device 100 are not limited thereto. The electronic device 100 may not include some configurations, and may additionally include a configuration for performing a different function. For example, the electronic device 100 according to an embodiment of the disclosure may further include a camera unit, a display unit, or the like.

Here, the state inference unit 121 may include, as an artificial neural network model separate from the artificial neural network 10 of FIG. 2, a state inference model trained to predict state information of a device after an input time point when state information of the device is input. Here, the state inference model may be implemented as an RNN.

The state inference model according to an embodiment of the disclosure may have been regression-trained based on an input of state information for training at a preset third time point and target state information at a fourth time point after a preset time interval from the preset third time point.

In other words, the state inference model may be trained to calculate a loss function according to state information inferred based on an input of state information for training and ground truth that is target state information, and to reduce an output value of the calculated loss function.

The state inference unit 121 may receive an input of first state information of each device at a preset first time point from a plurality of devices connected to a network for distributed inference of the artificial neural network 10. Also, the state inference model may infer, based on an input of the first state information of each device, second state information of each device at a second time point after a preset time interval from the first time point.

Also, the state inference unit 121 may additionally receive an input of state information of each device before the first time point, and then may infer the second state information of each device at the second time point.

Here, the first state information and the second state information of each device may be state information related to an amount of available computations of each device for inference using the artificial neural network. For example, each of first state information and second state information according to an embodiment of the disclosure may include at least one of a usage rate of a CPU, a usage rate of a GPU, a temperature of the CPU, a temperature of the GPU, the number of executed applications, or an elapsed time.

Here, the elapsed time may indicate an inverse number of floating-point operations per second (FLOPS) that is a unit for indicating a computation speed of a computer as the number of instructions processable per unit time. Also, in the present specification, the elapsed time may indicate a predicted computation time per 1 block of a DNN model. That is, the elapsed time may be a reference of a level at which a device can process the artificial neural network 10 of FIG. 2.

The state inference unit 121 according to an embodiment of the disclosure may infer an elapsed time at a second time point by receiving an input of first state information of a preset device, or may calculate an elapsed time at the second time point by using second state information inferred by inferring a usage rate of a CPU, a usage rate of a GPU, a temperature of the CPU, a temperature of the GPU, and the number of executed applications of the preset device, based on the first state information.

Also, the state inference unit 121 according to an embodiment of the disclosure may additionally receive an input of third state information including at least one of whether a preset application is executed, whether a screen is turned on, or whether a camera is executed, as well as the first state information. When the preset application is executed, the screen is turned on, or the camera is executed, it is predicted that a usage amount of the CPU and the GPU is increased in the device, and thus, the elapsed time at the second time point may be inferred by additionally receiving an input with respect to the execution of preset application.

In this case, the state inference model included in the state inference unit 121 may be trained by receiving an input of state information for training including at least one of whether a preset application is executed, whether a screen is turned on, or whether a camera is executed at a preset third time point, and target state information at a fourth time point.

The inference ratio calculator 123 may receive an input of second state information of each device from the state inference unit 121, and thus, may calculate an inference distribution ratio of the artificial neural network 10 of FIG. 2. The inference ratio calculator 123 according to an embodiment of the disclosure may normalize an inverse number of an elapsed time of each device, as in Equation 1 below. Also, the normalized inverse number of the elapsed time may be determined as an inference distribution ratio (ri) of the artificial neural network.

[Equation 1]

$$r_i = \frac{1/(t_i)}{\sum_{j=1}^{n} 1/(t_j)}$$

Here, it may indicate an inferred elapsed time of a second time point of an ith device, and n may indicate a total number of a plurality of devices.

For example, when a predicted elapsed time of the first device 200 of FIG. 2 is 0.5, a predicted elapsed time of the second device 300 is 0.4, a predicted elapsed time of the third device 400 is 0.4, and a predicted elapsed time of the electronic device 100 is 0.1, an inference distribution ratio of the first device 200 may be determined as 0.1176, an inference distribution ratio of the second device 300 and the third device 400 may be determined as 0.1471, and an inference distribution ratio of the electronic device 100 may be determined as 0.5882.

Referring back to FIG. 2, the electronic device 100 according to an embodiment of the disclosure may transfer a determined inference distribution ratio of each device and a start point of an inference procedure of the artificial neural network. In this case, the plurality of devices may store an entire structure of the artificial neural network 10. For example, when the determined inference distribution ratio of the first device 200 is 0.1176, the electronic device 100 may transfer the determined inference distribution ratio of 0.1176 and a start point to the first device 200. Also, when the determined inference distribution ratio of the second device 300 is 0.1471, the electronic device 100 may transmit the determined inference distribution ratio of 0.1471 and a start point that is a point of 11.76 % in the entire artificial neural network 10. As described above, an inference distribution ratio and a start point may be allocated to each device, and then, each device may perform a distributed inference procedure of the artificial neural network 10.

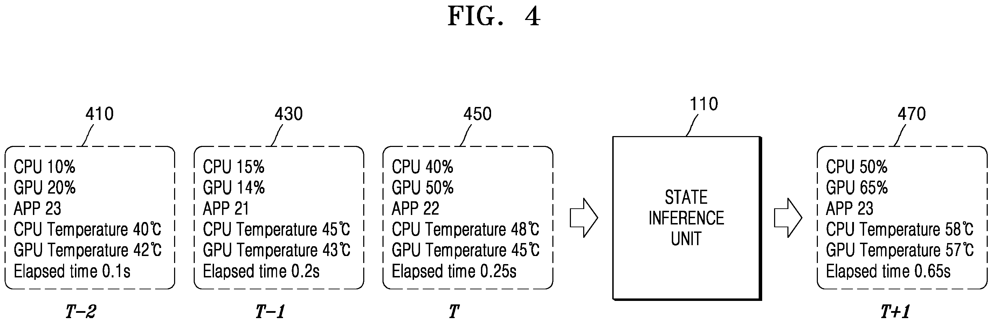

FIG. 4 illustrates an operation in which an electronic device infers second state information by receiving an input of first state information of a first device, according to an embodiment.

Referring to FIG. 4, the state inference unit 121 may receive an input of first state information 450 at a first time point T with respect to the first device 200 of FIG. 2, state information 430 of a preset time point T-1 before the first time point T, and state information 410 at a previous time point T-2. While FIG. 4 illustrates that pieces of state information at three time points with respect to the first device 200 are input, only the first state information 450 at the first time point T may be input, or only the first state information 450 at the first time point T and the state information 430 of the time point T-1 before the first time point T may be input.

Here, the first state information 450 may include a usage rate of a CPU, a usage rate of a GPU, the number of executed applications, a temperature of the CPU, a temperature of the GPU and an elapsed time.

The state inference unit 121 may receive an input of pieces of state information 410, 430, and 450 at three time points, and thus, may infer second state information 470 of the first device 200 of FIG. 2 at a second time point T+1. Here, the inferred second state information 470 may be 50% as a usage rate of a CPU, 65% as a usage rate of a GPU, 23 as the number of executed applications, 58 °C as a temperature of the CPU, 57 °C as a temperature of the GPU and 0.65 seconds as an elapsed time.

When the state inference unit 121 infers a state of the first device 200 of FIG. 2 at a time point after the second time point T+1, the inferred second state information 470 may be used as an input.

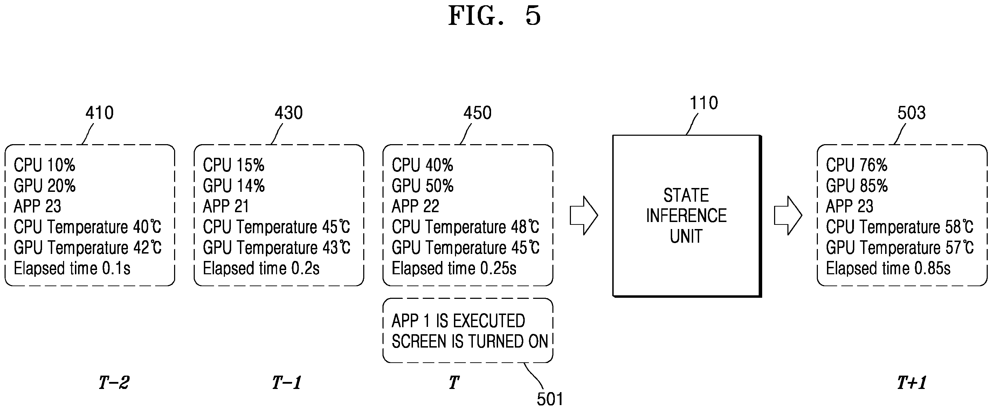

FIG. 5 illustrates an example of an operation in which an electronic device infers second state information by receiving an input of first state information and third state information, according to an embodiment.

Referring to FIG. 5, the state inference unit 121 may additionally receive an input of third state information 501 as well as the pieces of input state information 410, 430, and 450 of FIG. 4. The third state information 501 that is input at a first time point T may include whether a particular application App 1 is executed and whether a screen is turned on. In this case, the pre-trained state inference model may infer a CPU usage and a GPU usage which are greater than the second state information 470 of FIG. 4, and may also infer a higher CPU temperature and GPU temperature.

Also, the state inference unit 121 may receive the input of the third state information 501, and thus, may infer 0.85 seconds as an elapsed time of the first device 200 which is longer than an elapsed time of 0.65 seconds of the second state information 470 of FIG. 4. When the inference ratio calculator 123 of FIG. 3 receives second state information 503 from the state inference unit 121, the inference ratio calculator 123 may determine an inference distribution ratio of the first device 200 to be smaller via Equation 1 above, based on the inferred elapsed time.

In FIG. 5, while it is described that third state information of a device includes whether a particular application is executed and whether a screen is turned on, this is merely an example, and thus, the third state information may be state information of a known device in which an environment where a GPU or a CPU is usable may be built. For example, the third state information may further include whether a camera is turned on.

As the state inference unit 121 can infer second state information by obtaining first state information including a usage amount of a CPU or a GPU and additionally obtaining third state information capable of significantly changing the usage amount of the CPU or the GPU of the device at a later time, there may be various effects including an effect in which a significant increase in the usage amount of the CPU or the GPU due to execution of a particular application may be further accurately predicted and thus may be applied to an inference distribution ratio.

Referring back to FIG. 2, according to an embodiment of the disclosure, in order to save storage spaces of the plurality of devices included in the distributed inference system, the artificial neural network 10 may not be stored in the plurality of devices. In this case, the electronic device 100 may store the artificial neural network 10, and may transmit a portion of the artificial neural network 10 which is necessary for each device to perform an inference procedure of the artificial neural network 10, according to an inference distribution ratio determined by the electronic device 100.

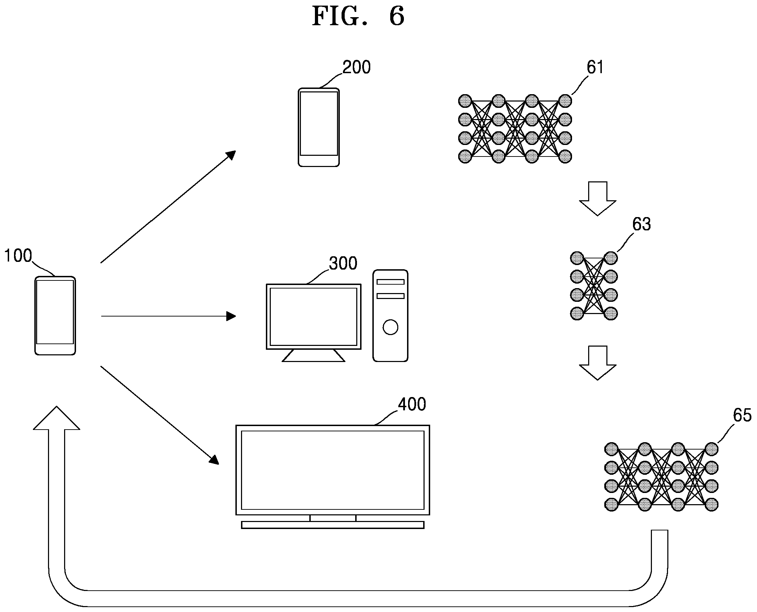

FIG. 6 illustrates an example of an operation in which a portion of an artificial neural network is transmitted to at least one device according to a determined inference distribution ratio, and each device performs inference of the artificial neural network.

Referring to FIGS. 2 and 6, the electronic device 100 may determine an inference distribution ratio of each of the first device 200, the second device 300, the third device 400, and the electronic device 100, and may transmit a portion of the artificial neural network 10 of FIG. 2 which is allocated according to the inference distribution ratio of each device. In this case, an artificial neural network for inference may not be stored in the first device 200, the second device 300, and the third device 400, and the artificial neural network may be stored in the electronic device 100.

When the inference distribution ratio of the first device 200 is determined as 0.25, the electronic device 100 may transmit, to the first device 200, a first procedure 61 corresponding to up to 25% from the beginning of an entire artificial neural network. Also, when the inference distribution ratio of the second device 300 is determined as 0.1, the electronic device 100 may transmit, to the second device 300, a second procedure 63 corresponding to 10% of an entire inference procedure starting from 25%-point of the entire artificial neural network, and when the inference distribution ratio of the third device 400 is determined as 0.25, the electronic device 100 may transmit, to the third device 400, a third procedure 65 corresponding to 25% of the entire inference procedure starting from 35%-point of the entire artificial neural network. In this case, the electronic device 100 may perform an inference procedure that starts from 60%-point of the entire artificial neural network and corresponds to 40% of the entire artificial neural network.

Hereinafter, an inference procedure after transmission of an inference procedure to be performed by each device, and an inference distribution ratio resetting procedure will now be described.

The first device 200 may perform the first procedure 61 by receiving an input of an input value of an artificial neural network to perform inference, and thus, may obtain a first intermediate result value. Afterward, the first device 200 may transmit, to the second device 300, the obtained first intermediate result value and state information of the first device 200 at a time point when the first procedure 61 is performed.

The second device 300 may obtain a second intermediate result value by using the received first intermediate result value as an input to a second procedure 63. Afterward, the second device 300 may transmit, to the third device 400, the obtained second intermediate result value, state information of the second device 300 at a time point when the second procedure 63 is performed, and the received state information of the first device 200.

The third device 400 may obtain a third intermediate result value by using the received second intermediate result value as an input to a third procedure 65. Afterward, the third device 400 may transmit, to the electronic device 100, the obtained third intermediate result value, state information of the third device 400 at a time point when the third procedure 65 is performed, the received state information of the first device 200, and the received state information of the second device 300.

The electronic device 100 may obtain a final inference result by using the received third intermediate result value as an input to a remaining procedure of the artificial neural network, and may reset an inference distribution ratio by inferring state information of each device at a following time point, based on the received state information of each device and state information of the electronic device 100 at a time point when the final inference result is obtained.

Referring back to FIG. 1, the electronic device 100 that is preselected and determines inference distribution ratio from among the plurality of devices may be a device having good network connection or a large amount of computations, compared to other devices. In other words, the electronic device 100 may be a device determined based on a network state of each device from among the plurality of devices.

Here, the network state may be a network input/output (I/O) packet amount of each device which is based on test information a first device randomly selected from among the plurality of devices receives from each device excluding the first device.

Also, the electronic device 100 may be one candidate device connected to a wired network from among at least one candidate device that is selected from among the plurality of devices and has a network I/O packet amount equal to or smaller than a preset packet amount.

The electronic device 100 according to an embodiment of the disclosure may be a candidate device having a highest GPU throughput from among the at least one candidate device.

As described above, the first device that is randomly selected from among the plurality of devices may select the electronic device 100 to determine an inference distribution ratio.

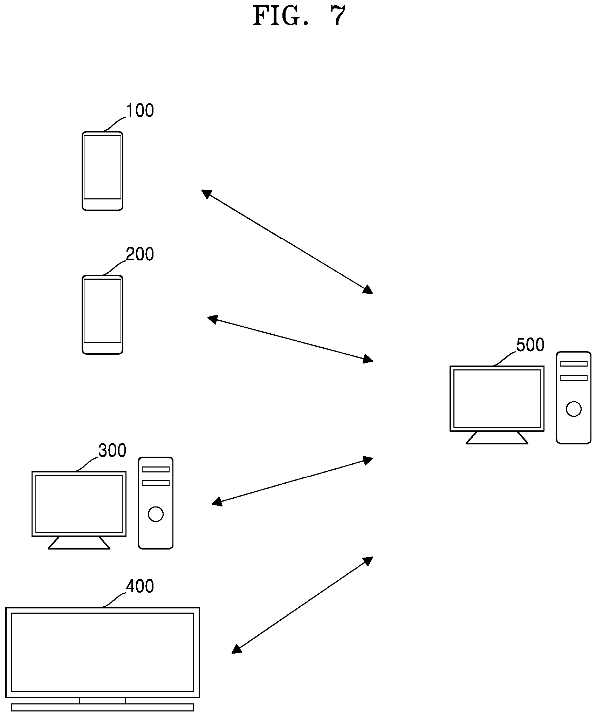

Hereinafter, with reference to FIG. 7, a method by which a device that is not included in the distributed inference system selects the electronic device 100 to determine an inference distribution ratio will now be described.

FIG. 7 illustrates an example of selecting an electronic device to determine an inference distribution ratio from among a plurality of devices.

Referring to FIG. 7, a fourth device 500 to select an electronic device to determine an inference distribution ratio of an artificial neural network may be present as well as the electronic device 100, the first device 200, the second device 300, and the third device 400.

The fourth device 500 may receive test information from each device, and may measure a network I/O packet amount of each device, based on the received test information.

The fourth device 500 may select at least one candidate device having a network I/O packet amount equal to or smaller than a preset packet amount from among the electronic device 100, the first device 200, the second device 300, and the third device 400. In this case, when the selected candidate device is only the electronic device 100, the fourth device 500 may select the electronic device 100 as the electronic device to determine an inference distribution ratio of an artificial neural network.

Also, the fourth device 500 may determine whether there is at least one device connected to a wired network from among selected candidate devices. When there is at least one device connected to a wired network from among the selected candidate devices, the fourth device 500 may select a device having a highest GPU throughput from among the at least one device connected to a wired network, as the electronic device to determine an inference distribution ratio of an artificial neural network.

When at least one device connected to a wired network from among selected candidate devices does not exist, the fourth device 500 may select a device having a highest GPU throughput from among the candidate devices, as the electronic device to determine an inference distribution ratio of an artificial neural network

The electronic device 100 selected from among the plurality of devices according to an embodiment of the disclosure may be a device having a better network environment or a high GPU throughput, compared to other devices, and thus, may stably perform distributed inference of the artificial neural network.

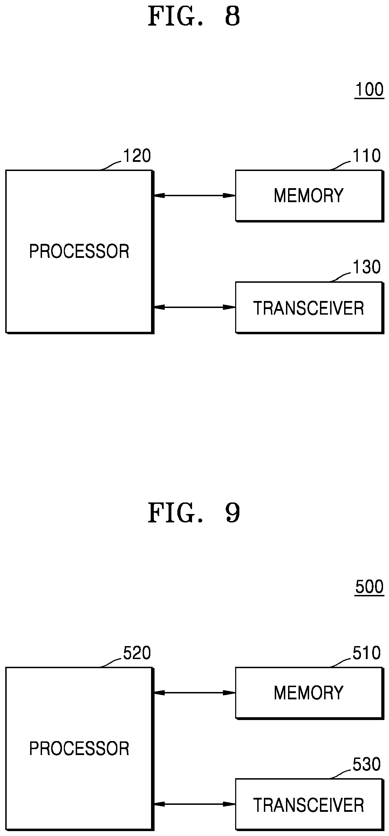

FIG. 8 illustrates a block diagram of a configuration of an electronic device, according to an embodiment.

Referring to FIG. 8, the electronic device 100 according to an embodiment of the disclosure may include a memory 110, a processor 120, and a transceiver 130. In any embodiment of the disclosure, a configuration of the electronic device 100 is not limited to what is illustrated in FIG. 8, and thus, may additionally include a configuration not illustrated in FIG. 8 or may not include some of the configuration illustrated in FIG. 8.

For example, although not illustrated in FIG. 8, the electronic device 100 may further include an input unit for receiving an artificial neural network and an input of input data, and an output unit for outputting a result.

Also, an operation of the processor 120 which is to be described below may be implemented as a software module stored in the memory 110. For example, the software module may be stored in the memory 110, and may operate by being executed by the processor 120.

The memory 110 may store a command or data associated with an operation of configurations that are electrically connected to the processor 120 and are included in the electronic device 100. In any embodiment of the disclosure, the memory 110 may store instructions with respect to operations for performing inference on first state information, third state information, an artificial neural network model, and a state inference model of each device which are obtained by using the transceiver 130.

According to an embodiment of the disclosure, when at least some modules included in each unit that is conceptual unit of a function of the electronic device 100 are implemented as software executable by the processor 120, the memory 110 may store instructions for executing the software module.

The processor 120 may be electrically connected to configurations included in the electronic device 100, and thus, may perform control of the configurations included in the electronic device 100 and/or computations with respect to communication or data processing. According to an embodiment of the disclosure, the processor 120 may load, to the memory 110, and process a command or data received from at least one of other configurations, and may store result data in the memory 110.

In addition, while FIG. 8 illustrates that, for convenience of descriptions, the processor 120 operates as one processor 120, functions of a learning model and electronic device to be described below may be conceptually classified and the conceptual functions may be implemented as a plurality of processors. In this case, the processor 120 may not operate as one processor 120 but the plurality of processors may be implemented as separate hardware to perform each operation. The disclosure is not limited thereto.

The transceiver 130 may support establishment of a wired or wireless communication channel between the electronic device 100 and other external electronic device, and performing of communication via the established communication channel.

Also, in any embodiment of the disclosure, the transceiver 130 may include a wireless communication module (e.g., a cellular communication module, a short-range wireless communication module, or a global navigation satellite system (GNSS) communication module) or a wired communication module (e.g., a LAN communication module, or a power line communication module), and may communicate with an external electronic device via a short-range communication network (e.g., Bluetooth, Wi-Fi direct, or IrDA) or a long-range communication network (e.g., a cellular network, the Internet, or a computer network (e.g., a LAN or a WAN)), by using the communication module.

The plurality of devices in FIG. 2 for distributed inference of an artificial neural network may each include configurations that perform same functions as the memory 110, the processor 120, and the transceiver 130. A function of each configuration is the same as described above, and thus, detailed description thereof are not provided here.

FIG. 9 illustrates a block diagram of a configuration of a device that selects an electronic device, according to an embodiment.

Referring to FIG. 9, the fourth device 500 according to an embodiment of the disclosure may include a memory 510, a processor 520, and a transceiver 530. In any embodiment of the disclosure, a configuration of the electronic device is not limited to what is illustrated in FIG. 9, and thus, may additionally include a configuration not illustrated in FIG. 9 or may not include some of the configuration illustrated in FIG. 9.

The memory 510 may store a command or data associated with an operation of configurations that are electrically connected to the processor 520 and are included in the electronic device. In any embodiment of the disclosure, the memory 510 may store instructions with respect to operations for determining an electronic device for selecting an inference distribution ratio by using a network I/O packet amount obtained using the transceiver 530.

The processor 520 may be electrically connected to configurations included in the electronic device, and thus, may perform control of the configurations included in the electronic device and/or computations with respect to communication or data processing. According to an embodiment of the disclosure, the processor 520 may load, to the memory 510, and process a command or data received from at least one of other configurations, and may store result data in the memory 510.

In addition, while FIG. 9 illustrates that, for convenience of descriptions, the processor 520 operates as one processor 520, functions of a learning model and electronic device to be described below may be conceptually classified and the conceptual functions may be implemented as a plurality of processors. In this case, the processor 520 may not operate as one processor 520 but the plurality of processors may be implemented as separate hardware to perform each operation.

The transceiver 530 may support establishment of a wired or wireless communication channel between the electronic device and other external electronic device, and performing of communication via the established communication channel. According to an embodiment of the disclosure, the transceiver 530 may receive data from the other external electronic device via wired communication or wireless communication or may transmit data to an electronic device including a server for controlling other external base station.

Also, in any embodiment of the disclosure, the transceiver 530 may include a wireless communication module (e.g., a cellular communication module, a short-range wireless communication module, or a GNSS communication module) or a wired communication module (e.g., a LAN communication module, or a power line communication module), and may communicate with an external electronic device via a short-range communication network (e.g., Bluetooth, Wi-Fi direct, or IrDA) or a long-range communication network (e.g., a cellular network, the Internet, or a computer network (e.g., a LAN or a WAN)), by using the communication module.

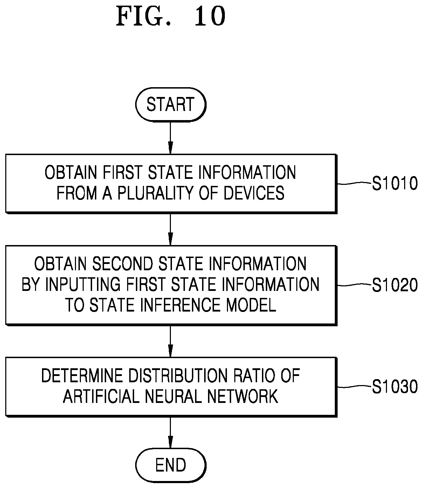

FIG. 10 illustrates a flowchart of a method, performed by an electronic device, of determining an inference distribution ratio of an artificial neural network, according to an embodiment.

Referring to FIGS. 2 and 10, the electronic device 100 may obtain first state information at a predetermined first time point from each of a plurality of devices (S1010).

Here, the first state information may include at least one of a usage rate of a CPU, a usage rate of a GPU, a temperature of the CPU, a temperature of the GPU, the number of executed applications, or an elapsed time of each device.

The electronic device 100 may obtain third state information including at least one of whether a preset application is executed, whether a screen is turned on, or whether a camera is executed, at the first time point.

Also, the electronic device 100 may obtain second state information of each device at a second time point, after a preset time interval from the first time point, by inputting the first state information to a state inference model trained to predict state information after the input (S1020).

The state inference model may have been regression-trained based on an input of state information for training at a preset third time point and target state information at a fourth time point after a preset time interval from the preset third time point.

Here, the second state information may include at least one of a usage rate of a CPU, a usage rate of a GPU, a temperature of the CPU, a temperature of the GPU, the number of executed applications, or an elapsed time of each device at the second time point.

The electronic device 100 may determine an inference distribution ratio of an artificial neural network of each device, based on the obtained second information of each device (S1030).

The electronic device 100 may normalize an inverse number of the elapsed time of each device, and may determine the normalized inverse number of the elapsed time as the inference distribution ratio of the artificial neural network.

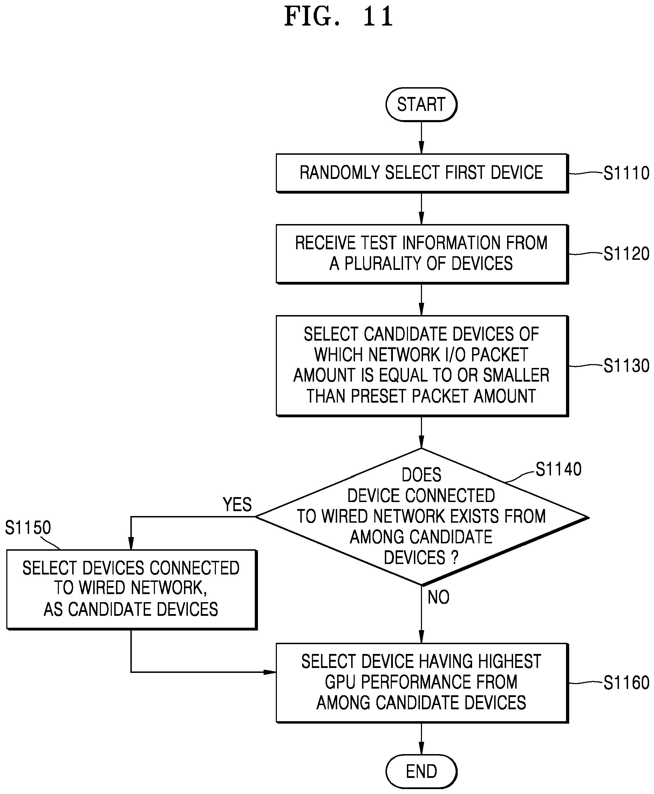

FIG. 11 illustrates a flowchart of a method of selecting an electronic device for determining an inference distribution ratio of an artificial neural network, according to an embodiment.

Referring to FIG. 11, a first device from among a plurality of devices may be randomly selected (S1110).

The randomly selected first device may receive test information from the plurality of devices excluding the first device (S1120), and may determine whether a network I/O packet amount of each device is equal to or smaller than a preset packet amount, and thus, may select at least one candidate device of which network I/O packet amount is equal to or smaller than the preset packet amount (S1130).

The first device may determine whether a device connected to a wired network exists from among the selected at least one candidate device (S1140), and when the device connected to a wired network exists (Yes of S1140), the first device may select again the device connected to a wired network, as a candidate device (S1150).

A device having highest GPU performance from among the selected candidate device may be selected as an electronic device for determining an inference distribution ratio of an artificial neural network (S1160).

According to an embodiment of the disclosure, an electronic device for determining an inference distribution ratio of devices for distributedly inferring an artificial neural network may include a memory storing a state inference model trained to predict, when state information is input, state information after the input, a transceiver, and at least one processor configured to execute one or more instructions stored in the memory. The at least one processor may be further configured to execute the one or more instructions to obtain, via the transceiver, first state information of each of the devices at a predetermined first time point. The at least one processor may be further configured to execute the one or more instructions to obtain second state information of each of the devices at a second time point, after a preset time interval from the first time point, by inputting the first state information to the state inference model. The at least one processor may be further configured to execute the one or more instructions to determine an inference distribution ratio of the artificial neural network of each of the devices, based on the second state information of each of the devices. The electronic device may be determined among the devices, based on network states of the devices.

Each of the first state information and the second state information may include at least one of a usage rate of a CPU, a usage rate of a GPU, a temperature of the CPU, a temperature of the GPU, the number of executed applications, or an elapsed time of each of the devices.

The second state information may include an elapsed time, and the at least one processor may be further configured to execute the one or more instructions to normalize an inverse number of the elapsed time of each of the devices, and determine the normalized inverse number of the elapsed time, as the inference distribution ratio of the artificial neural network of each of the devices.

The at least one processor may be further configured to execute the one or more instructions to further obtain third state information including at least one of whether a preset application is executed, whether a screen is turned on, or whether a camera is executed, at the first time point, and obtain the second state information by additionally inputting the third state information to the state inference model.

The at least one processor may be further configured to execute the one or more instructions to transmit the determined inference distribution ratio and an inference start point of the artificial neural network to each of the devices via the transceiver.

The at least one processor may be further configured to execute the one or more instructions to partition the artificial neural network according to the determined inference distribution ratio, and transmit, via the transceiver, the partitioned artificial neural network to each of the devices corresponding to the determined inference distribution ratio.

The state inference model may have been regression-trained based on an input of state information for training at a preset third time point and target state information at a fourth time point after a preset time interval from the preset third time point.

The network states may be network I/O packet amounts of the devices based on test information a first device randomly selected from among the devices receives from the devices excluding the first device.

The electronic device may be one candidate device connected to a wired network from among at least one candidate device that is selected from among the devices and has a network I/O packet amount equal to or smaller than a preset packet amount.

The electronic device may be a candidate device having a highest GPU throughput from among the at least one candidate device.

According to an embodiment of the disclosure, a method of determining an inference distribution ratio of an artificial neural network may include obtaining first state information at a predetermined first time point from each of devices including an electronic device, obtaining second state information of each of the devices at a second time point, after a preset time interval from the first time point, by inputting the first state information to a state inference model trained to predict state information after the inputting, and determining an inference distribution ratio of the artificial neural network of each of the devices, based on the second information of each of the devices, and the electronic device may be determined among the devices, based on network states of the devices.

Each of the first state information and the second state information may include at least one of a usage rate of a CPU, a usage rate of a GPU, a temperature of the CPU, a temperature of the GPU, the number of executed applications, or an elapsed time of each of the devices.

The second state information may include an elapsed time, and the determining of the inference distribution ratio may include normalizing an inverse number of the elapsed time of each of the devices, and determining the normalized inverse number of the elapsed time, as the inference distribution ratio of the artificial neural network.

The obtaining of the first state information may include obtaining third state information including at least one of whether a preset application is executed, whether a screen is turned on, or whether a camera is executed, at the first time point, and the obtaining of the second state information may include obtaining the second state information by additionally inputting the third state information to the state inference model.

The method may further include transmitting the determined inference distribution ratio and an inference start point of the artificial neural network to each of the devices.

The method may further include partitioning the artificial neural network according to the determined inference distribution ratio, and transmitting the partitioned artificial neural network to each of the devices corresponding to the determined inference distribution ratio.

The state inference model may have been regression-trained based on an input of state information for training at a preset third time point and target state information at a fourth time point after a preset time interval from the preset third time point.

The network states may be network I/O packet amounts of the devices based on test information a first device randomly selected from among the devices receives from the devices excluding the first device.

The electronic device may be one candidate device connected to a wired network from among at least one candidate device that is selected from among the devices and has a network I/O packet amount equal to or smaller than a preset packet amount.

The electronic device may be a candidate device having a highest GPU throughput from among the at least one candidate device.

A machine-readable storage medium may be provided in the form of a non-transitory storage medium. In this regard, the term "non-transitory storage medium" merely means that the storage medium is a tangible device, and does not include a signal (e.g., an electromagnetic wave), and this term does not differentiate between a case where data is semi-permanently stored in the storage medium and a case where the data is temporarily stored in the storage medium. For example, the non-transitory storage medium may include a buffer in which data is temporarily stored.

As a technical unit for achieving the above-described technical object, a computer-readable medium may include one or more program codes. The one or more program codes may execute, when executed by an electronic device, a method of determining an inference distribution ratio of an artificial neural network, the method including obtaining first state information at a predetermined first time point from each of devices including an electronic device, obtaining second state information of each of the devices at a second time point, after a preset time interval from the first time point, by inputting the first state information to a state inference model trained to predict state information after the inputting, and determining an inference distribution ratio of the artificial neural network of each of the devices, based on the second information of each of the devices, and the electronic device may be determined among the devices, based on network states of the devices.

A computer-readable medium disclosed as a technical unit for achieving the above-described technical object may store a program for executing at least one of the methods according to any embodiment of the disclosure.

According to an embodiment of the disclosure, the method according to any embodiment disclosed in the present specification may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store, or between two user devices (e.g., smart phones) directly. For electronic distribution, at least a part of the computer program product (e.g., a downloadable app) may be temporarily generated or be at least temporarily stored in a machine-readable storage medium, e.g., a server of a manufacturer, a server of an application store, or a memory of a relay server.

The embodiments of the present disclosure have been shown and described above with reference to the accompanying drawings. The embodiments disclosed in the specification and drawings are only intended to provide specific examples for easily describing the technical content of the disclosure and for assisting understanding of the disclosure, and are not intended to limit the scope of the disclosure. It will be understood by those of ordinary skill in the art that the present disclosure may be easily modified into other detailed forms without changing the technical principle or essential features of the present disclosure, and without departing from the gist of the disclosure as claimed by the appended claims and their equivalents. Therefore, it should be interpreted that the scope of the disclosure includes all changes or modifications derived based on the technical idea of the disclosure in addition to the embodiments disclosed herein.

**Claims**

1. An electronic device, comprising:

   a memory storing a state inference model, and at least one instruction;
   a transceiver; and
   at least one processor configured to execute the at least one instruction to:

   obtain, via the transceiver, first state information of each of a plurality of devices at a first time point,
   obtain second state information of each of the plurality of devices at a second time point that is a preset time interval after the first time point, by inputting the first state information to the state inference model, and
   determine an inference distribution ratio of the artificial neural network of each of the plurality of devices, based on the second state information of each of the plurality of devices,
   wherein the electronic device is determined from among the plurality of devices, based on network states of the plurality of devices.

2. The electronic device of claim 1, wherein each of the first state information and the second state information comprises at least one of a usage rate of a central processing unit (CPU), a usage rate of a graphics processing unit (GPU), a temperature of the CPU, a temperature of the GPU, the number of executed applications, or an elapsed time of each of the plurality of devices.

3. The electronic device of any one of claim 1 or claim 2, wherein the second state information comprises an elapsed time, and the at least one processor is further configured to execute the at least one instruction to:

   normalize an inverse number of the elapsed time of each of the plurality of devices, and
   determine the normalized inverse number of the elapsed time, as the inference distribution ratio of the artificial neural network of each of the plurality of devices.

4. The electronic device of any one of claims 1 to 3, wherein the at least one processor is further configured to execute the at least one instruction to:

obtain third state information comprising at least one of whether a preset application is executed, whether a screen is turned on, or whether a camera is executed, at the first time point; and obtain the second state information based on additionally inputting the third state information to the state inference model.

5. The electronic device of any one of claims 1 to 4, wherein the at least one processor is further configured to execute the at least one instruction to transmit, via the transceiver, the determined inference distribution ratio and an inference start point of the artificial neural network to each of the plurality of devices.

6. The electronic device of any one of claims 1 to 5, wherein the at least one processor is further configured to execute the at least one instruction to:

partition the artificial neural network according to the determined inference distribution ratio, and transmit, via the transceiver, the partitioned artificial neural network to each of the plurality of devices corresponding to the determined inference distribution ratio.

7. The electronic device of any one of claims 1 to 6, wherein the state inference model is regression-trained based on an input of state information for training at a third time point and target state information at a fourth time point after a preset time interval from the third time point.

8. The electronic device of any one of claims 1 to 7, wherein the network states are network input/output (I/O) packet amounts of the plurality of devices based on test information received by a first device from among the plurality of devices excluding the first device, the first device being randomly selected from the plurality of devices.

9. The electronic device of claim 8, wherein the electronic device is a candidate device connected to a wired network from among at least one candidate device that is selected from among the plurality of devices and has a network I/O packet amount equal to or smaller than a preset packet amount.

10. The electronic device of claim 9, wherein the electronic device is a candidate device having a highest GPU throughput from among the at least one candidate device.

11. A method, performed by an electronic device, comprising:

obtaining first state information at a first time point from each of a plurality of devices; obtaining second state information of each of the plurality of devices at a second time point that is a preset time interval after the first time point, by inputting the first state information to a state inference model; and determining an inference distribution ratio of an artificial neural network of each of the plurality of devices, based on the second state information of each of the plurality of devices, wherein the electronic device is determined among the plurality of devices, based on network states of the plurality of devices.

12. The method of claim 11, wherein each of the first state information and the second state information comprises at least one of a usage rate of a central processing unit (CPU), a usage rate of a graphics processing unit (GPU), a temperature of the CPU, a temperature of the GPU, the number of executed applications, or an elapsed time of each of the plurality of devices.

13. The method of any one of claim 11 or 12, wherein the second state information comprises an elapsed time, and the determining of the inference distribution ratio comprises:

normalizing an inverse number of the elapsed time of each of the plurality of devices; and determining the normalized inverse number of the elapsed time, as the inference distribution ratio of the artificial neural network of each of the plurality of devices.

14. The method of any one of claims 11 or 13, wherein the network states are network input/output (I/O) packet amounts of the plurality of devices based on test information received by a first device from among the plurality of devices excluding the first device, the first device being randomly selected from the plurality of devices.

15. A non-transitory computer readable medium for storing computer readable program code or instructions which are executable by a processor to perform a method, the method comprising:

obtaining first state information at a first time point from each of devices comprising an electronic device; obtaining second state information of each of the devices at a second time point that is a preset time interval after the first time point, by inputting the first state information to a state inference model; and determining an inference distribution ratio of an artificial neural network of each of the plurality of devices, based on the second information of each of the plurality of devices,
wherein the electronic device is determined from among the plurality of devices, based on network states of the plurality of devices.

FIG. 1

FIG. 2

# FIG. 3

# FIG. 4

**410 (T-2):** CPU 10% / GPU 20% / APP 23 / CPU Temperature 40°C / GPU Temperature 42°C / Elapsed time 0.1s

**430 (T-1):** CPU 15% / GPU 14% / APP 21 / CPU Temperature 45°C / GPU Temperature 43°C / Elapsed time 0.2s

**450 (T):** CPU 40% / GPU 50% / APP 22 / CPU Temperature 48°C / GPU Temperature 45°C / Elapsed time 0.25s

**110 STATE INFERENCE UNIT**

**470 (T+1):** CPU 50% / GPU 65% / APP 23 / CPU Temperature 58°C / GPU Temperature 57°C / Elapsed time 0.65s

# FIG. 5

**410**

```
CPU 10%
GPU 20%
APP 23
CPU Temperature 40℃
GPU Temperature 42℃
Elapsed time 0.1s
```

*T-2*

**430**

```
CPU 15%
GPU 14%
APP 21
CPU Temperature 45℃
GPU Temperature 43℃
Elapsed time 0.2s
```

*T-1*

**450**

```
CPU 40%
GPU 50%
APP 22
CPU Temperature 48℃
GPU Temperature 45℃
Elapsed time 0.25s
```

```
APP 1 IS EXECUTED
SCREEN IS TURNED ON
```

*T*

**501**

**110**

STATE INFERENCE UNIT

**503**

```
CPU 76%
GPU 85%
APP 23
CPU Temperature 58℃
GPU Temperature 57℃
Elapsed time 0.85s
```

*T+1*

EP 4 471 668 A1

FIG. 6

EP 4 471 668 A1

# FIG. 7

# FIG. 8

100

120

PROCESSOR

110

MEMORY

130

TRANSCEIVER

# FIG. 9

500

520

PROCESSOR

510

MEMORY

530

TRANSCEIVER

# FIG. 10

START

OBTAIN FIRST STATE INFORMATION
FROM A PLURALITY OF DEVICES — S1010

OBTAIN SECOND STATE INFORMATION
BY INPUTTING FIRST STATE INFORMATION — S1020
TO STATE INFERENCE MODEL

DETERMINE DISTRIBUTION RATIO OF
ARTIFICIAL NEURAL NETWORK — S1030

END

# FIG. 11

START

RANDOMLY SELECT FIRST DEVICE ——S1110

RECEIVE TEST INFORMATION FROM
A PLURALITY OF DEVICES ——S1120

SELECT CANDIDATE DEVICES OF
WHICH NETWORK I/O PACKET
AMOUNT IS EQUAL TO OR SMALLER
THAN PRESET PACKET AMOUNT ——S1130

S1140
DOES
DEVICE CONNECTED
TO WIRED NETWORK EXISTS FROM
AMONG CANDIDATE
DEVICES ?

YES

S1150
SELECT DEVICES CONNECTED
TO WIRED NETWORK,
AS CANDIDATE DEVICES

NO

SELECT DEVICE HAVING HIGHEST
GPU PERFORMANCE FROM
AMONG CANDIDATE DEVICES ——S1160

END

<table>
<tr><td colspan="2" align="center">**INTERNATIONAL SEARCH REPORT**</td><td>International application No.<br><br>**PCT/KR2023/007112**</td></tr>
</table>

| | |
|---|---|
| **A.** | **CLASSIFICATION OF SUBJECT MATTER** |
| | **G06N 3/08**(2006.01)i; **G06N 3/04**(2006.01)i; **G06N 5/04**(2006.01)i; **G06F 9/50**(2006.01)i; **H04L 67/289**(2022.01)i; **H04L 67/10**(2022.01)i |
| | According to International Patent Classification (IPC) or to both national classification and IPC |

| | |
|---|---|
| **B.** | **FIELDS SEARCHED** |
| | Minimum documentation searched (classification system followed by classification symbols) |
| | G06N 3/08(2006.01); G06F 9/50(2006.01); G06N 3/04(2006.01); G06N 5/02(2006.01); G06N 5/04(2006.01); G06N 99/00(2010.01); G06Q 10/04(2012.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 인공신경망(artificial neural network), 장치 상태(device status), 시간(time), 예측 (predict), 분산(distribution), 처리(process), 미래(future) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2019-0093785 A (KOOKMIN UNIVERSITY INDUSTRY ACADEMY COOPERATION FOUNDATION) 12 August 2019 (2019-08-12)<br>See paragraphs [0034], [0052] and [0061]; and claims 1 and 3. | 1-15 |
| Y | JP 5443686 B2 (NS SOLUTIONS CORP.) 19 March 2014 (2014-03-19)<br>See claims 1 and 4. | 1-15 |
| A | KR 10-2021-0100335 A (SAMSUNG ELECTRONICS CO., LTD.) 17 August 2021 (2021-08-17)<br>See paragraphs [0163]-[0178]; and figure 8. | 1-15 |
| A | KR 10-2019-0113928 A (GOOGLE LLC) 08 October 2019 (2019-10-08)<br>See paragraphs [0045]-[0061]; and figure 3. | 1-15 |
| A | JP 2012-008699 A (NIPPON TELEGRAPH AND TELEPHONE CORP.) 12 January 2012 (2012-01-12)<br>See claims 1-3. | 1-15 |

| | |
|---|---|
| ☐ Further documents are listed in the continuation of Box C. | ☑ See patent family annex. |

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>**28 August 2023** | Date of mailing of the international search report<br><br>**28 August 2023** |
| Name and mailing address of the ISA/KR<br><br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

INTERNATIONAL SEARCH REPORT
**Information on patent family members**

International application No.

**PCT/KR2023/007112**

| Patent document cited in search report | | | Publication date (day/month/year) | Patent family member(s) | | | Publication date (day/month/year) |
|---|---|---|---|---|---|---|---|
| KR | 10-2019-0093785 | A | 12 August 2019 | None | | | |
| JP | 5443686 | B2 | 19 March 2014 | JP | 2009-151381 | A | 09 July 2009 |
| KR | 10-2021-0100335 | A | 17 August 2021 | US | 2021-0248501 | A1 | 12 August 2021 |
| KR | 10-2019-0113928 | A | 08 October 2019 | CN | 110268422 | A | 20 September 2019 |
| | | | | EP | 3559868 | A1 | 30 October 2019 |
| | | | | JP | 2020-512639 | A | 23 April 2020 |
| | | | | JP | 6790286 | B2 | 25 November 2020 |
| | | | | KR | 10-2208989 | B1 | 28 January 2021 |
| | | | | US | 10692003 | B2 | 23 June 2020 |
| | | | | US | 2019-0303761 | A1 | 03 October 2019 |
| | | | | US | 2020-0279163 | A1 | 03 September 2020 |
| | | | | WO | 2018-175972 | A1 | 27 September 2018 |
| JP | 2012-008699 | A | 12 January 2012 | JP | 5580669 | B2 | 27 August 2014 |

Form PCT/ISA/210 (patent family annex) (July 2022)